# EUROPÄISCHE PATENTSCHRIFT

(11) **EP 0 825 215 B1**
(45) Veröffentlichungstag und Bekanntmachung des Hinweises auf die Patenterteilung: **29.09.1999**
(21) Anmeldenummer: 97111142.2
(22) Anmeldetag: 03.07.1997
(51) Int. Cl.: C08G 18/79

(54) **Ein vereinfachtes Verfahren zur Herstellung von uretdiongruppenhaltigen Polyadditionsverbindungen**
A simplified process for the manufacture of uretdionegroup containing polyaddition compounds
Procedure simple pour manufacture d'un composé contenant des groupes uretdione

(30) Priorität: 23.08.1996 DE 19634053
(43) Veröffentlichungstag der Anmeldung: 25.02.1998
(73) Patentinhaber: HÜLS AKTIENGESELLSCHAFT, 45764 Marl (DE)
(72) Erfinder: Wolf, Elmar, Dr., 45661 Recklinghausen (DE)

(56) Entgegenhaltungen:
- EP-A- 0 045 994
- DE-A- 2 420 475
- DE-A- 3 030 572

## Beschreibung

Gegenstand der vorliegenden Erfindung ist ein einfaches Verfahren zur Herstellung von uretdiongruppenhaltigen Polyadditionsverbindungen, das besonders zur Herstellung von hochschmelzenden uretdiongruppenhaltigen Polyadditionsverbindungen geeignet ist.

In der DE-PS 30 30 572 werden uretdiongruppenhaltige Polyadditionsverbindungen beschrieben, die zur Herstellung von blockierungsmittelfreien PUR-Pulvern inzwischen wirtschaftliche Bedeutung erlangt haben. Bei diesen in der DE-PS 30 30 572 beanspruchten Verbindungen handelt es sich um Polyadditionsverbindungen aus einem isocyanuratgruppenfreien uretdiongruppenhaltigen Isophorondiisocyanat (im folgenden als Isophorondiisocyanat-Uretdion bezeichnet und als IPDI-Uretdion abgekürzt) und Diolen, wobei das so erhaltene Additionsprodukt gegebenenfalls ganz oder teilsweise mit Monoalkoholen bzw. Monoaminen umgesetzt wird. Die Herstellung dieser uretdiongruppenhaltigen Polyadditionsverbindungen erfolgt in zwei Stufen, wobei in der 1. Stufe die Reaktionskomponenten in einem Lösemittel umgesetzt werden, und nach erfolgter Umsetzung das Lösemittel, in der Regel ist es Aceton, entfernt wird Dazu geeignet sind Abdampfschnecken und Filmtruder. Abgesehen davon, daß diese Lösemittelentfernung eine aufwendige Technologie beinhaltet, kann man mit diesen Verfahren nur uretdiongruppenhaltige Polyadditionsverbindungen mit einem Schmelzpunkt von maximal 125 °C herstellen, da nach der Entfernung des Lösemittels das Reaktionsprodukt als Schmelze ausgetragen wird und die Temperatur dieser Schmelze wegen der Thermoinstabilität des Uretdionringes verständlicherweise nach oben hin limitiert ist.

In der EP 0 669 353 wird die lösemittelfreie und kontinuierliche Herstellung der uretdiongruppenhaltigen Polyadditionsverbindungen mittels Intensivkneter in einem Ein- oder Mehrschneckenextruder, insbesondere in einem Zweiwellenextruder, beschrieben. Auch hier lassen sich nur Produkte mit einem Schmelzpunkt bis maximal 120 °C herstellen.

Aufgabe der vorliegenden Erfindung war es somit, ein einfaches Verfahren zur Herstellung von uretdiongruppenhaltigen Polyadditionsverbindungen aus IPDI-Uretdion und Diolen und/oder Aminoalkoholen und/oder Diaminen mit beliebig hohen Schmelzpunkten aufzuzeigen.

Diese Aufgabe konnte überraschenderweise dadurch gelöst werden, daß die uretdiongruppenhaltige Polyadditionsverbindung (UD-DA) in Lösung hergestellt wurde, und man durch Zugabe eines zweiten Lösemittels (L 2), in dem die UD-DA unlöslich sind, diese UD-DA ausfällte.

Gegenstand der vorliegenden Erfindung ist somit ein Verfahren zur Herstellung von uretdiongruppenhaltigen Polyadditionsverbindungen aus IPDI-Uretdion und Diolen und/oder Aminoalkoholen und/oder Diaminen der folgenden Formel: 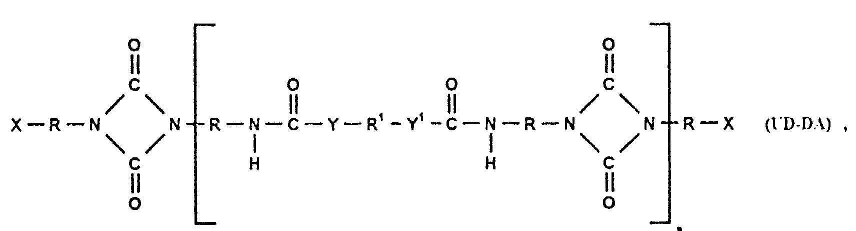 wobei
- X:: -N=C=O, 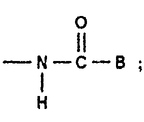
- B:: 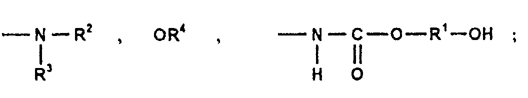
- Y, Y':: O, NH, NR⁵;
- n:: 1 - 20 ;
- R:: 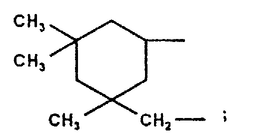
- R¹:: zweiwertiger Kohlenwasserstoffrest mit 2 - 16 C-Atomen;
- R²:: H, gleiche oder verschiedene Kohlenwasserstoffreste mit 1 - 14 C-Atomen;
- R³, R⁴, R⁵:: gleiche oder verschiedene Kohlenwasserstoffreste mit 1 - 14 C-Atomen, bedeuten,
wobei diese uretdiongruppenhaltigen Polyadditionsverbindungen (UD-DA) in Lösung (L 1) hergestellt werden, und man durch Zugabe eines zweiten Lösemittels (L 2), in dem die uretdiongruppenhaltigen Polyadditionsverbindungen unlöslich sind, diese Verbindungen (UD-DA) ausfällt.

Bei dem im erfindungsgemäßen Verfahren einzusetzenden Uretdion handelt es sich um das Isophorondiisocyanat-Uretdion, wie es in den DE-OSS 30 30 513 und 37 39 549 beschrieben wird, mit einem freien NCO-Gehalt von 17 - 18 %, d. h. daß mehr oder minder hohe Anteile an Polyuretdion des IPDI im Reaktionsprodukt vorliegen müssen. Der Monomergehalt liegt bei ≤ 1 %. Der Gesamt-NCO-Gehalt des IPDI-Uretdions nach dem Erhitzen auf 180 - 200 °C (0,5 - 1 h) beträgt 37,5 - 37,8 %.

Reaktionspartner für das IPDI-Uretdion sind im erfindungsgemäßen Verfahren Diole, wie z. B. Ethylenglykol, Propylen-1.2- und -1.3-glykol, 2-Ethylhexandiol, Hexandiol, Octan-, Decan-, Dodecandiol, Neopentylglykol, 1,4-Bishydroxymethylcyclohexan, 3(4)-, 8(9)-Bishydroxymethyltricyclododecan, 2-Methylpropandiol-1.3, 3-Methylpentandiol-1.5, Diethylenglykol und Hydroxypivalinsäureneopentylglykolester. Bevorzugt findet Butandiol-1.4 als Reaktionskomponente für IPDI-Uretdion Anwendung.

Als Diole können vorteilhafterweise lineare hydroxylgruppenhaltige Polyester mit einer Molmasse zwischen 250 und 2000, vorzugsweise 300 - 1500, als Kettenverlängerer für IPDI-Uretdion eingesetzt werden Sie werden hergestellt z. B. durch Kombination von Diolen und Dicarbonsäuren. Zur Herstellung der Kettenverlängerer werden die obengenannten Diole, bevorzugt trans- und cis-Cyclohexandimethanol (CHDM), eingesetzt.

Zu den bevorzugten Dicarbonsäuren zählen aliphatische, ggf. alkylverzweigt, wie Bernstein-, Adipin-, Kork-, Azelain-, Sebacinsäure und 2 2.4(2.4.4)-Trimethyladipinsäure. Weiterhin werden auch Lactone und Hydroxycarbonsäuren, wie ε-Caprolacton und Hydroxycapronsäure, dazu gezählt.

Die im erfinderischen Verfahren eingesetzten Diol/Kettenverlängerer-Gemische stehen im Verhältnis 5:95 bis 90:10 zueinander.

Anstelle von Diolen können auch Aminoalkohole als Kettenverlängerungsmittel für IPDI-Uretdion eingesetzt werden. Geeignete Aminoalkohole sind im Prinzip alle Verbindungen, die eine primäre oder sekundäre Aminogruppe sowie eine primäre oder sekundäre OH-Gruppe enthalten, wie z. B. Ethanolamin, 2-Amino-1-butanol, 2-Amino-2-methyl-1-propanol, Monoisopropanol-amin, 2.2'-Aminoethoxyethanol, 3-Aminopropanol, 3-Aminomethyl-3.5.5-trimethylcyclohexanol, Methylethanolamin, n-Propylethanolamin, Butylethanolamin.

Weitere im erfindungsgemäßen Verfahren einzusetzende Reaktionskomponenten für das IPDI-Uretdion sind nicht aromatische Diamine. Bei diesen Diaminen handelt es sich einmal um diprimäre Diamine, wie z. B. Ethylendiamin, 1.2-Diaminopropan, 2-Methylpentamethylendiamin, Hexamethylendiamin, 2.2.4(2.4.4)-Trimethylhexamethylendiamin, Isophorondiamin (IPD), 1.2-Diaminocyclohexan, zum anderen um Diamine mit einer primären und sekundären Aminogruppe. Diese Diamine werden in zwei Stufen hergestellt, wobei in der 1. Stufe die oben aufgeführten diprimären Diamine mit einem Aldehyd oder Keton zur Schiffschen Base kondensiert werden, und in der 2. Stufe die Hydrierung und fraktionierte Destillation der Schiffschen Base erfolgt. Um möglichst wenig Nebenprodukt (Di-Schiffsche Base) zu erhalten, muß mit einem großen Überschuß an Diamin gearbeitet werden; in der Regel werden 10 mol Diamin mit einem Mol Carbonylverbindung umgesetzt. Für die Kondensation zur Schiffschen Base kommen grundsätzlich alle aliphatischen und (cyclo)aliphatischen Aldehyde und Ketone in Frage, bevorzugt werden jedoch Isobutyraldehyd, 2-Ethylhexanal, Methylethylketon, Diisobutylketon, Cyclohexanon und 3.5.5-Trimethylcyclohexanon eingesetzt. Eine vorteilhafte Variante des erfindungsgemäßen Verfahrens besteht darin, hydrierte cyanethylierte Monoamine, wie z. B. N-Methyl-1.3-propandiamin oder N-Cyclohexyl-1.3-propandiamin, einzusetzen.

Des weiteren können als Reaktionskomponente für IPDI-Uretdion im erfindungsgemäßen Verfahren disekundäre Diamine, die in Analogie zu den beschriebenen Diaminen mit einer primären und sekundären Aminogruppe hergestellt werden, eingesetzt werden. In manchen Fällen hat es sich als zweckmäßig erwiesen, Gemische der aufgeführten Diamine als Reaktionskomponente für IPDI-Uretdion einzusetzen.

Die uretdiongruppenhaltigen Polyadditionsverbindungen werden in zwei Stufen hergestellt, wobei in der 1. Stufe IPDI-Uretdion mit dem Diol und/oder Polyesterdiol und/oder Aminoalkohol und/oder Diamin in Lösung bei 20 - 90 °C umgesetzt wird. Geeignete Lösemittel sind aromatische Kohlenwasserstoffe, wie z. B. Toluol, Xylol, Ketone, wie z. B. Aceton, Methylisobutylketon, Cyclopentanon, Cyclohexanon oder Ester, wie z. B. Ethyl- bzw. Butylacetat. Die Umsetzung des IPDI-Uretdions mit dem Diol und/oder Polyesterdiol findet im allgemeinen bei Temperaturen von 60 - 80 °C statt. Die Reaktionskomponenten werden im NCO:OH-Verhältnis 1:0,5 - 1:0,95 bzw. 0,5:1 - 0,95:1 so lange bei den angegebenen Temperaturen erhitzt, bis alle OH-Gruppen unter Bildung von Urethangruppen umgesetzt sind. Dies dauert je nach Reaktionstemperatur 0,5 - 5 h. Zur Beschleunigung der Reaktion können auch Katalysatoren, wie z. B. Zinn-II-acetat, Zinn-II-laurat, Dibutylzinndiacetat, Dibutylzinndilaurat (DBTL), Dibutylzinnmaleat oder Dioctylzinndiacetat, eingesetzt werden.

Sollen bei einem NCO-OH-Verhältnis 1:0,5 - 1:0,95 die freien NCO-Gruppen der Reaktionsprodukte ganz oder teilweise mit Monoalkoholen irreversibel blockiert werden, so wird im Anschluß an die Kettenverlängerung das Reaktionsprodukt mit dem Monoalkohol so lange weitererhitzt, bis pro OH-Äquivalent die äquivalente Menge NCO umgesetzt worden ist. Geeignete einwertige Alkohole sind Methanol, Ethanol, n-Butanol, 2-Ethylhexanol und n-Decanol. Anstelle von Monoalkoholen können auch primäre oder sekundäre Monoamine, wie z. B. n-Propylamin, n-Butylamin, n-Hexylamin oder Dibutylamin, eingesetzt werden.

Bei der Umsetzung des IPDI-Uretdions mit den Diaminen geht man so vor, daß zu der acetonischen Lösung des IPDI-Uretdions bei Raumtemperatur das Diamin im NCO-NH-Verhältnis von 1:0,5 - 1:0,95 so zudosiert wird, daß die Temperatur der Reaktionslösung nicht über 40 °C steigt. Nach Beendigung der Diaminzugabe ist die Reaktion beendet. Sollen die freien NCO-Gruppen des Reaktionsproduktes noch ganz oder teilweise mit Monoalkoholen oder primären oder sekundären Monoaminen blockiert werden, so wird wie bei der bereits beschriebenen Blockierung der IPDI-Uretdion/Diol-Addukte verfahren.

In der 2. Stufe erfolgt nun die Isolierung der gelösten uretdiongruppenhaltigen Polyadditionsprodukte. Nach dem erfindungsgemäßen Verfahren wird die Lösung des UD-DA bei Raumtemperatur unter intensivem Rühren langsam dein Lösemittel (L 2) zudosiert. Dabei werden auf 100 Gew.-T. 30 - 70%ige Lösung des UD-DA mindestens 100 Gew.-T. Lösemittel L 2 benötigt. Als Lösemittel L 2, in denen die UD-DA unlöslich sind, kommen aliphatische oder cycloaliphatische Kohlenwasserstoffe, wie Hexan, Heptan, Octan, Decan, Cyclohexan oder beliebige Mischungen davon, wie z. B. Petrolether oder Wasser, in Frage. Beim Ausfallen des UD-DA durch das Lösemittel L 2 nach dem erfindungsgemäßen Verfahren ist es wichtig, die Lösung des UD-DA dem Lösemittel L 2 zuzugeben. Geht man umgekehrt vor, erhält man in den seltensten Fällen gut filtrierbare UD-DA.

Mit dem erfindungsgemäßen Verfahren ist es erstmals möglich geworden, hochschmelzende (Schmelzpunkt > 130 °C) uretdiongruppenhaltige Polyadditionsprodukte aufeinfache Weise herzustellen.

### Experimenteller Teil

### Beispiel 1

500 Gew.-T. einer ca. 50%igen acetonischen Lösung des Reaktionsproduktes aus 4,5 mol IPDI-Uretdion, 3,5 mol Butandiol und 2 mol 2-Ethylhexanol wurden unter intensivem Rühren innerhalb von ca. 1 h zu 500 Gew.-T. H₂O gegeben. Der gebildete Niederschlag wurde abfiltriert und im Vakuumtrockenschrank bei 60 °C getrocknet.

| | |
|---|---|
| NCO (frei) | 0,4 % |
| NCO, gesamt | 15,1 % |
| Smp. | 107-111°C |
| H₂O | < 0,1% |

### Beispiel 2

Das UD-DA des Beispiels 1 wurde in Toluol hergestellt. 500 Gew.-T. der ca. 40%igen toluolischen Lösung wurden innerhalb von ca. 1 h in 600 Gew.-T. Petrolether getropft. Der gebildete Niederschlag wurde abfiltriert und im Vakuumtrockenschrank bei 60 °C getrocknet.

| | |
|---|---|
| NCO (frei) | 0,5 % |
| NOC, gesamt | 15,3 % |
| Smp. | 105 - 110°C |

### Beispiel 3

500 Gew.-T. einer ca. 50%igen acetonischen Lösung des Reaktionsproduktes aus 10 mol IPDI-Uretdion, 7 mol N-(2-Hexyl)-Isophorondiamin und 2 mol IPD wurden unter intensivem Rühren innerhalb von ca. 1 h zu 500 Gew.-T. H₂O gegeben. Der gebildete Niederschlag wurde abfiltriert und im Vakuumtrockenschrank bei 60 °C getrocknet.

| | |
|---|---|
| NCO (frei) | 1,0 % |
| NCO, gesamt | 14,1 % |
| Smp. | 156- 160°C |
| H₂O | < 0,1% |

## Patentansprüche

1. Verfahren zur Herstellung von uretdiongruppenhaltigen Polyadditionsverbindungen aus IPDI-Uretdion und Diolen und/oder Aminoalkoholen und/oder Diaminen der folgenden Formel: 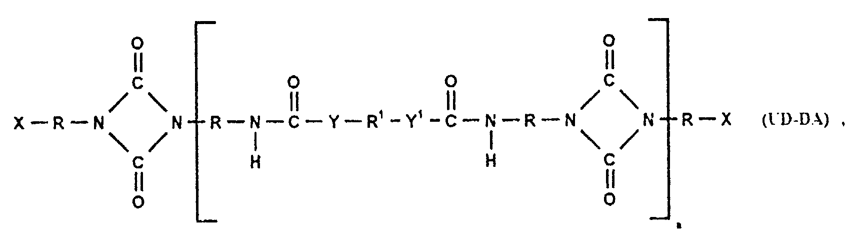 wobei
X: -N=C=O, 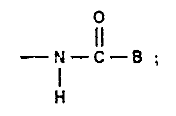
B: 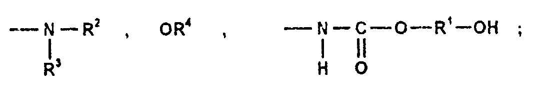
Y, Y': O, NH, NR⁵ ;
n: 1 - 20 ;
R: 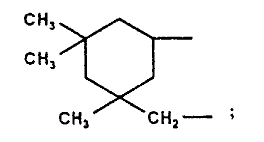
R¹: zweiwertiger Kohlenwasserstoffrest mit 2 - 16 C-Atomen;
R²: H, gleiche oder verschiedene Kohlenwasserstoffreste mit 1 - 14 C-Atomen,
R³, R⁴, R⁵: gleiche oder verschiedene Kohlenwasserstoffreste mit 1 - 14 C-Atomen, bedeuten,
wobei diese uretdiongruppenhaltigen Polyadditionsverbindungen (UD-DA) in Lösung (L 1) hergestellt werden, und man durch Zugabe eines zweiten Lösemittels (L 2), in dem die uretdiongruppenhaltigen Polyadditionsverbindungen unlöslich sind, diese Verbindungen (UD-DA) ausfällt.

2. Verfahren gemäß Anspruch 1,
dadurch gekennzeichnet,
daß die UD-DA in aromatischen Kohlenwasserstoffen wie Toluol, Xylol, Ketonen, wie z. B. Aceton, Methylisobutylketon, Cyclopentanon, Cyclohexanon oder Estern, wie z. B. Ethyl- oder Butylacetat gelöst sind.

3. Verfahren gemäß Anspruch 1,
dadurch gekennzeichnet,
daß das Fällungsmittel aliphatische bzw. cycloaliphatische Kohlenwasserstoffe, wie z.B. Hexan, Heptan, Cyclohexan, Petrolether oder Wasser ist.

## Claims

1. A process for preparing uretdione-functional polyaddition compounds from IPDI uretdione and diols and/or amino alcohols and/or diamines of the following formula: 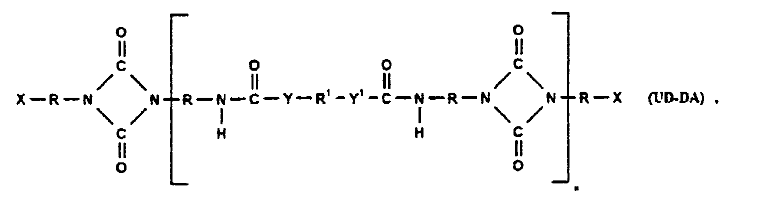 in which the reference symbols have the following meanings:
X: -N=C=O, 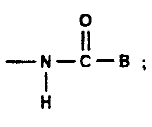
B: 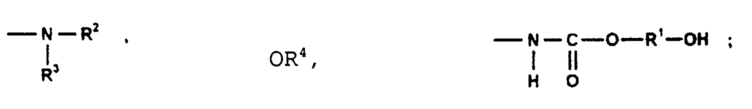
Y, Y' : O, NH, NR⁵;
n: 1-20;
R: 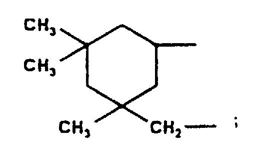
R¹: divalent hydrocarbon radical of 2-16 carbon atoms;
R²: H, identical or different hydrocarbon radicals of 1-14 carbon atoms;
R³, R⁴, R⁵: identical or different hydrocarbon radicals of 1-14 carbon atoms,
these uretdione-functional polyaddition compounds (UD-DA) being prepared in solution (L1), and these compounds (UD-DA) being precipitated by adding a second solvent (L2) in which the uretdione-functional polyaddition compounds are insoluble.

2. A process according to claim 1,
characterized in that the UD-DA compounds are dissolved in aromatic hydrocarbons such as toluene, xylene, ketones such as, for example, acetone, methyl isobutyl ketone, cyclopentanone and cyclohexanone, or esters such as, for example, ethyl or butyl acetate.

3. A process according to claim 1,
characterized in that the precipitant is an aliphatic or cycloaliphatic hydrocarbon such as, for example, hexane, heptane, cyclohexane, petroleum ether or water.

## Revendications

1. Procédé de fabrication de composés de polyaddition contenant des groupes urétdione à partir d'IPDI-urétdione et de diols et/ou d'aminoalcools et/ou de diamines de formule ci-dessous : 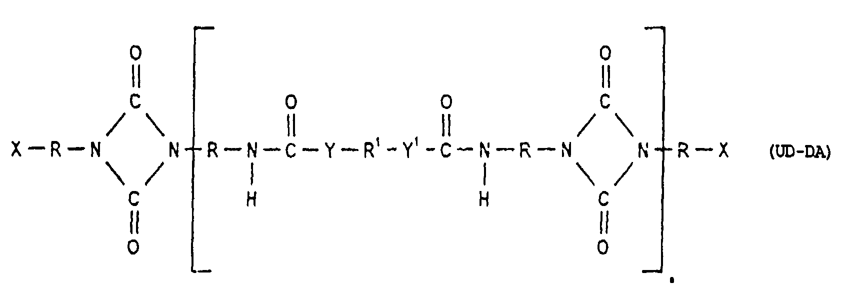 dans laquelle
N: -N=C=O, 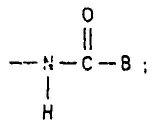
B: 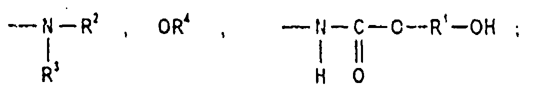
Y, Y': O, NH NR⁵
n: 1 - 20 ;
R: 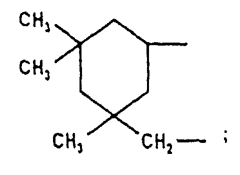
R¹ : radical hydrocarboné bivalent comportant 2 à 16 atomes de carbone ;
R² : H, radicaux hydrocarbonés identiques ou différents comportant de 1 à 14 atomes de carbone ;
R³, R⁴, R⁵ : radicaux hydrocarbonés identiques ou différents comportant de 1 à 14 atomes de carbone,
où ces composés de polyaddition contenant des groupes urétdione (UDDDA) sont produits en solution (L 1), et l'on précipite ces composés (UD-DA) par addition d'un second solvant (L 2), dans lequel les composés de polyaddition contenant des groupes urétdione sont insolubles.

2. Procédé selon la revendication 1,
caractérisé en ce que
les UD-DA sont dissous dans des hydrocarbures aromatiques comme le toluène, le xylène, les cétones, comme par exemple l'acétone, la méthylisobutylcétone, la cyclopentanone, la cyclohexanone ou des esters, comme par exemple de l'acétate d'éthyle ou de butyle.

3. Procédé selon la revendication 1,
caractérisé en ce que
l'agent de précipitation est constitué d'hydrocarbures aliphatiques ou selon les cas cycloaliphatiques, comme par exemple l'hexane, l'heptane, le cyclohexane, l'éther de pétrole ou l'eau.
